# EUROPÄISCHE PATENTSCHRIFT

(11) **EP 0 625 298 B1**
(45) Veröffentlichungstag und Bekanntmachung des Hinweises auf die Patenterteilung: **13.08.1997**
(21) Anmeldenummer: 92924710.4
(22) Anmeldetag: 10.12.1992
(51) Int. Cl.: H04N 7/087, H04N 5/445

(54) **VERFAHREN ZUM EMPFANGEN SICH IN EINEM ODER MEHREREN ZYKLEN WIEDERHOLENDER TELETEXTDATEN**
PROCESS FOR RECEIVING TELETEXT DATA WHICH ARE REPEATED IN ONE OR MORE CYCLES
PROCEDE POUR RECEVOIR DES DONNEES DE TELETEXTE SE REPETANT AU COURS D'UN OU DE PLUSIEURS CYCLE(S)

(30) Priorität: 06.02.1992 DE 4203309
(43) Veröffentlichungstag der Anmeldung: 23.11.1994
(73) Patentinhaber: KONLE, Tilmar, 81247 München (DE)
(72) Erfinder: EITZ, Gerhard, D-8011 Poing (DE); OBERLIES, Karl-Ulrich, D-5600 Wuppertal 11 (DE)
(86) Internationale Anmeldenummer: EP9202858
(87) Internationale Veröffentlichungsnummer: WO9316555

(56) Entgegenhaltungen:
- EP-A- 0 468 447
- NACHRICHTEN TECHNISCHE ZEITSCHRIFT Bd. 42, Nr. 11, November 1989, BERLIN, DEUTSCHLAND Seiten 724 - 727 'TOP macht Fernsehtext benutzerfreundlich'
- RUNDFUNKTECHNISCHE MITTEILUNGEN Bd. 28, Nr. 6, November 1984, NORDERSTEDT, DEUTSCHLAND Seiten 273 - 289 GERHARD EITZ 'Kombinierer f r Videotextsignale'

## Beschreibung

Die Erfindung bezieht sich auf ein Verfahren gemäß dem Oberbegriff des Patentanspruchs 1. Ein derartiges Verfahren ist aus der EP-B-0 264 565 bekannt.

Bei dem sogenannten TOP-Verfahren (TOP = Table of Pages), wie es aus der EP-B-0 264 565 bekannt ist, wird im Teletext-Zyklus als Sonderseite eine sogenannte "Basis-TOP-Tabelle" übertragen, welche Informationen über die momentane Teletext-Seiten-Belegung des Zyklus enthält. Anhand dieser Basis-TOP-Tabelle hat der Empfänger eine zuverlässige Information darüber, ob eine vom Benutzer gewünschte Teletext-Seite im Zyklus vorhanden ist, so daß unnötiges Warten vermieden wird.

Um die Teletext-Seiten bzw. Magazine zu je 100 Teletext-Seiten von verschiedenen Teletext-Anbietern bzw. Teletext-Quellen in einem einzigen Fernsehsignal zusammengefaßt zu übertragen, gibt es die beiden Möglichkeiten des seriellen und des parallelen Betriebs. Beim seriellen Betrieb, welcher in der Bundesrepublik Deutschland praktiziert wird, werden die Teletext-Seiten der verschiedenen Teletext-Quellen mittels Kombinierer vor der Ausstrahlung zusammengefaßt und als neuer Teletext-Zyklus in das betreffende Fernsehsignal eingefügt. Gleichzeitig mit dem neuen Teletext-Zyklus erstellt der Kombinierer eine neue Basis-TOP-Tabelle.

Beim parallelen Betrieb, der z.B. in Großbritannien praktiziert wird, werden die Magazine der verschiedenen Teletext-Quellen in entsprechend unterschiedlichen Zeilen der vertikalen Austastlücke des betreffenden Fernsehsignals übertragen. Um auch dort das TOP-Verfahren anzuwenden, müßte in jedem Magazin eine gesonderte Basis-TOP-Tabelle für die Seitenbelegung des betreffenden Magazins enthalten sein. Um sich über die Gesamtbelegung der empfangenen Magazine bzw. Teletext-Zyklen ein Bild machen zu können, müßte der Teletext-Decoder sämtliche Magazine nach der jeweils zugehörigen Basis-TOP-Tabelle abfragen, was zeitaufwendig wäre.

Die Aufgabe der Erfindung besteht demgegenüber darin, auch für den parallelen Betrieb verschiedener Teletext-Anbieter dem Decoder einen schnellen Überblick aller gesendeten Teletext-Seiten zu ermöglichen.

Diese Aufgabe wird erfindungsgemäß durch die kennzeichnenden Merkmale des Patentanspruchs 1 gelöst.

Vorteilhafte Ausgestaltungen und Weiterbildungen des erfindungsgemäßen Verfahrens ergeben sich aus den Unteransprüchen.

Die Erfindung wird anhand der Zeichnungen näher erläutert. Es zeigt:
- Fig. 1: ein Beispiel einer Basis-TOP-Tabelle für acht Magazine zu je 100 Teletext-Seiten;
- Fig. 2: einen vergrößerten Ausschnitt der Reihe Nummer 23 der Basis-TOP-Tabelle nach Fig. 1 mit der dort übertragenen Liste über die Basis-TOP-Tabellen der verschiedenen Magazine;
- Fig. 3: eine Code-Tabelle für die Codierung der Liste gemäß Fig. 2 und
- Fig. 4: ein Beispiel für die gemäß der Code-Tabelle nach Fig. 3 codierte Liste nach Fig. 2.

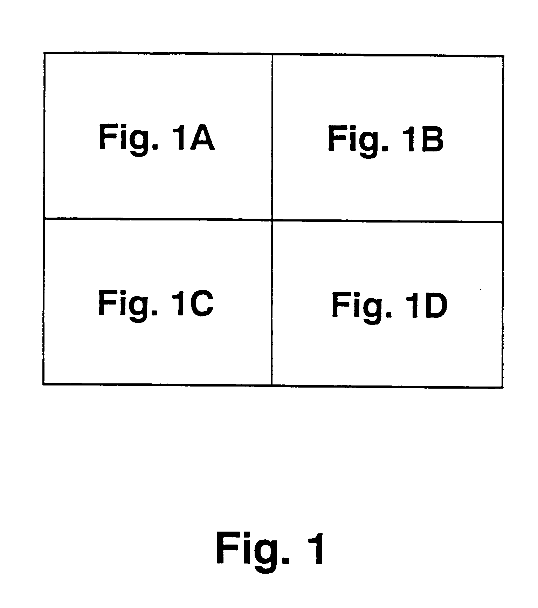

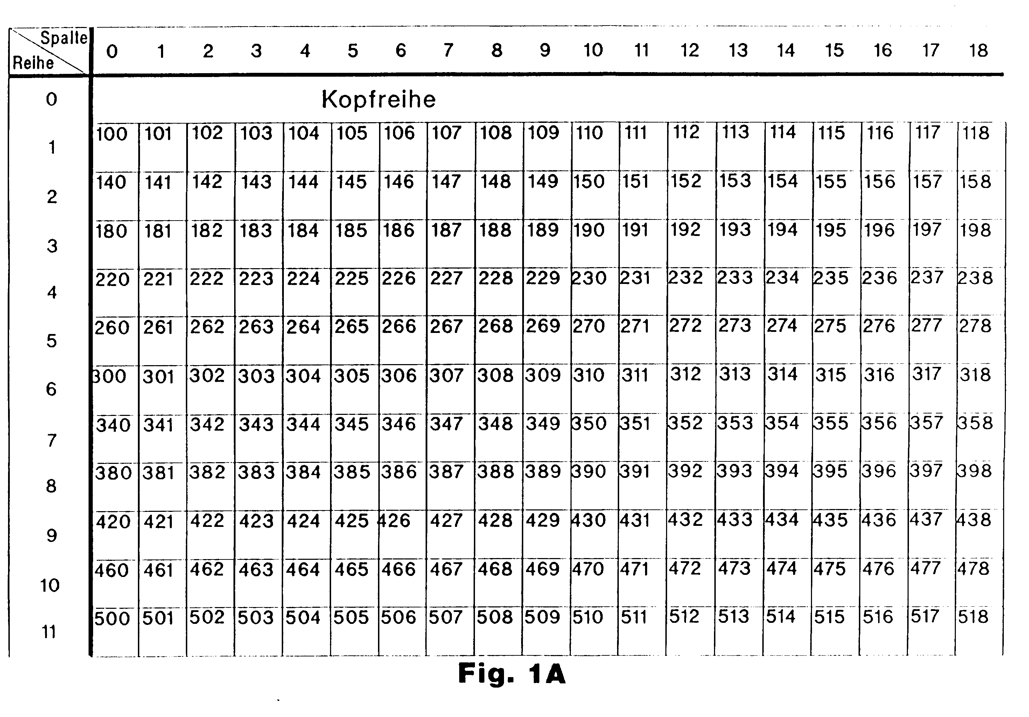

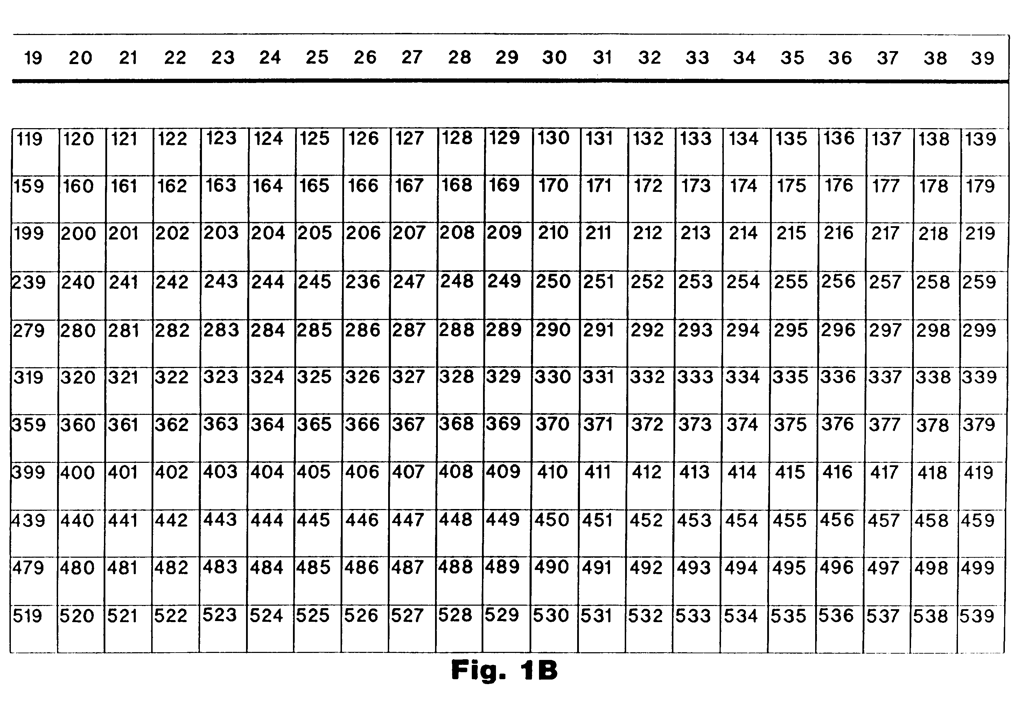

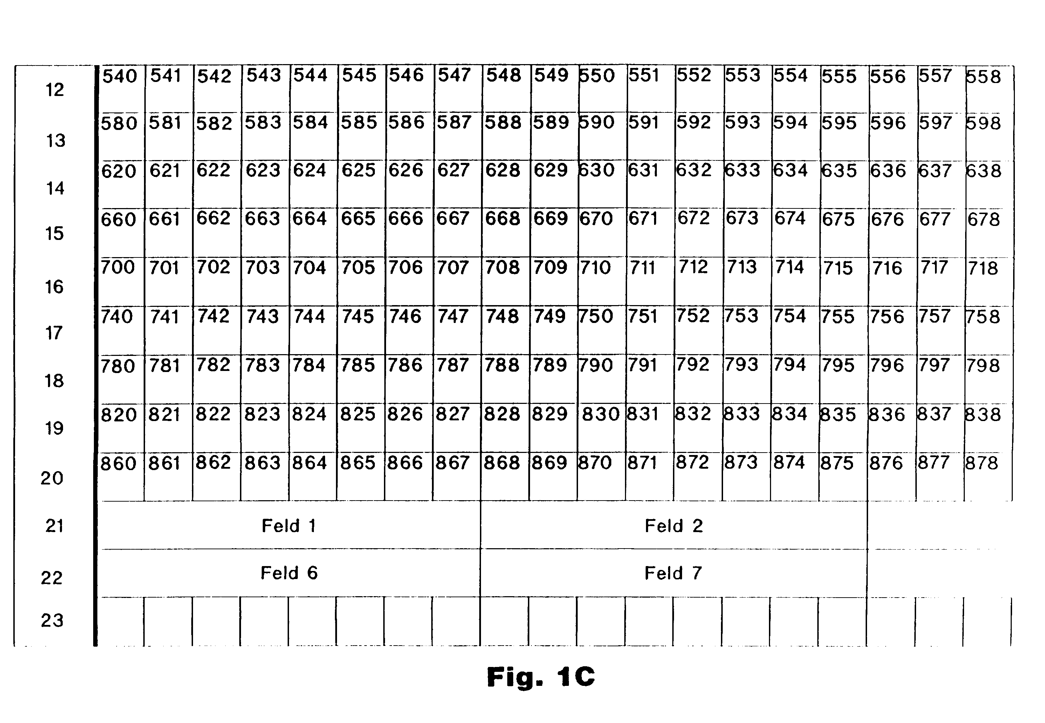

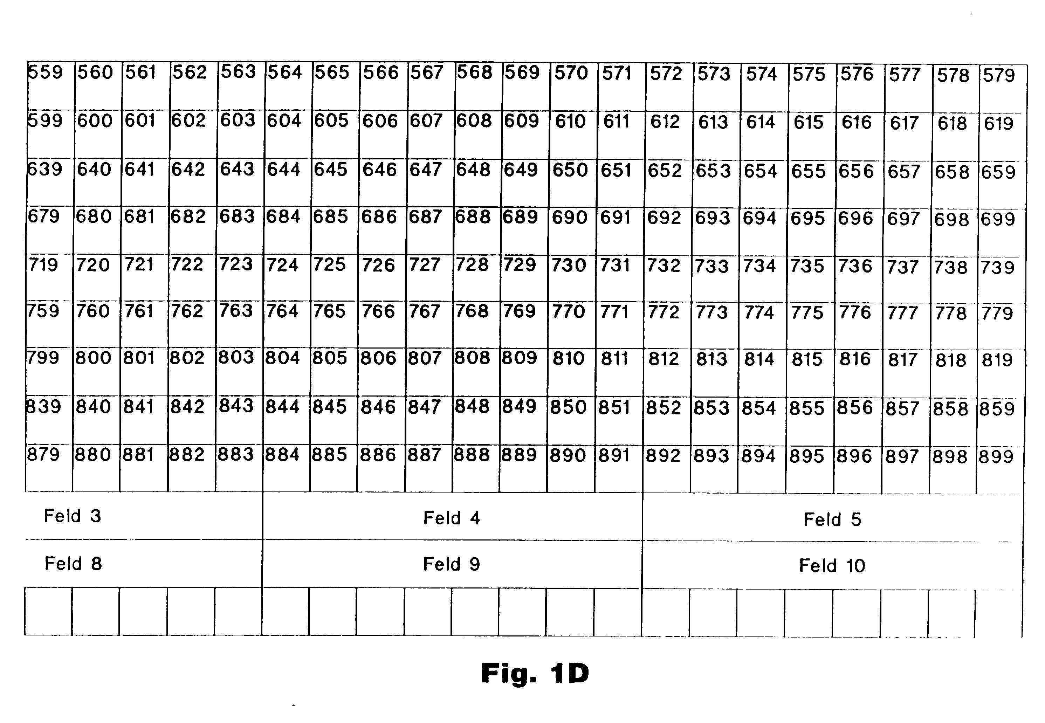

Fig. 1 zeigt eine herkömmliche Basis-TOP-Tabelle, welche als gesonderte Seite gelegentlich im Teletext-Zyklus übertragen wird und Informationen über alle momentan gesendete Teletext-Seiten eines oder mehrerer Magazine zu je 100 Teletext-Seiten enthält. In der Tabelle ist jeder Seite über ein Koordinatensystem (Reihenadresse, Spaltenadresse) ein Platz fest zugeordnet. Außerdem enthält die Basis-TOP-Tabelle in den Reihen 21 und 22 zehn Felder Nummer 1 bis Nummer 10, welche eine Liste von Seitennummern beinhalten, in denen Angaben über Mehrfachseiten und weitere Informationen für die Seiten des bzw. der betreffenden Magazine eingetragen sind.

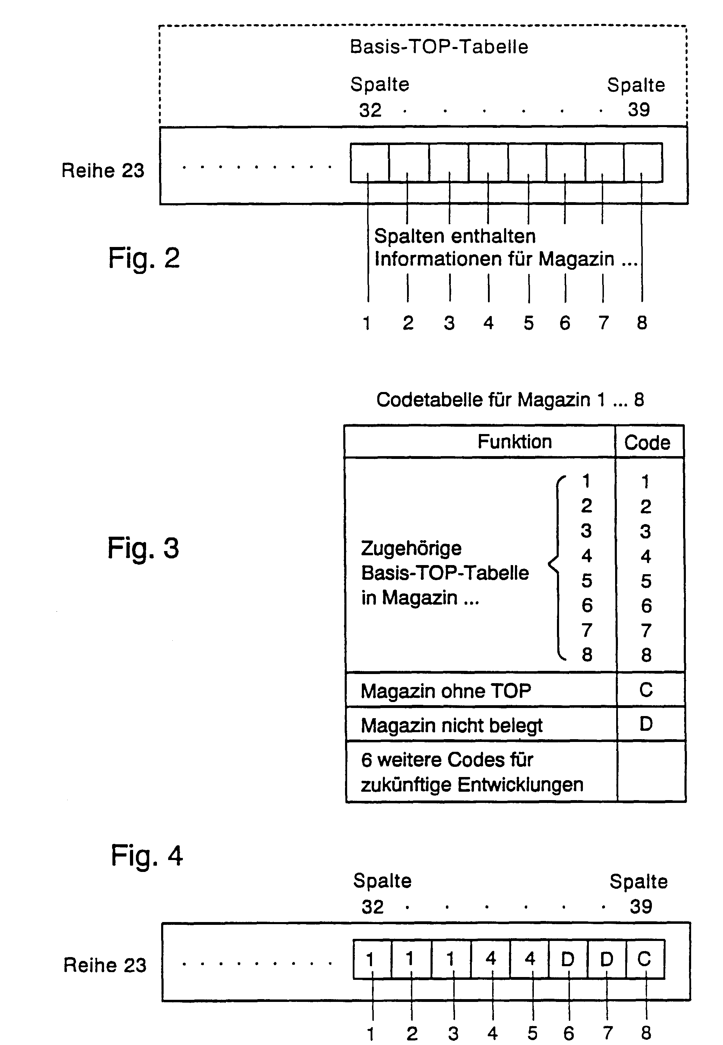

Die Erfindung geht von der Basis-TOP-Tabelle nach Fig. 1 aus, welche für den eingangs erwähnten parallelen Betrieb von zwei oder mehreren Teletext-Magazinen unterschiedlicher Teletext-Quellen in einem gemeinsamen Fernsehsignal modifiziert wird, wie der Ausschnitt der Reihe 23 nach Fig. 2 zeigt.

Erfindungsgemäß wird in Reihe 23, Spalten 32 bis 39 (die in Fig. 1 unbesetzt ist) eine Liste über die Basis-TOP-Tabellen aller im Zyklus übertragener Teletext-Magazine übertragen. Diese "Basis-TOP-Tabellen-Liste", nachstehend kurz "Liste" genannt, gibt an, welche Magazine Nummer 1 bis Nummer 8 mit Teletext-Seiten belegt sind und auf welcher bzw. welchen Basis-TOP-Tabellen die Basis-TOP-Informationen für die betreffenden Magazine übertragen werden. Jedem Teletext-Magazin ist dabei eine Spalte in der "Liste" fest zugeordnet. Der Inhalt der "Liste" kann entsprechend der Codetabelle nach Fig. 3 codiert werden. Danach sind die maximal acht Teletext-Magazine mit den fortlaufenden Nummern 1 bis 8 codiert. Spezielle Codierungen "C" und "D" sind vorgesehen für Magazine ohne TOP bzw. nicht belegte Magazine. Für künftige Entwicklungen sind sechs weitere Codes als Reserve vorgesehen.

Fig. 4 zeigt eine beispielhafte Belegung der "Liste". Bei diesem Beispiel sei angenommen, daß ein Teletext-Anbieter die Magazine Nummer 1, 2 und 3 im Parallelbetrieb beschickt. Zur Beschleunigung der empfängerseitigen TOP-Initialisierung faßt er die Basis-TOP-Informationen für die Magazine Nummer 1, 2 und 3 auf einer einzigen Basis-TOP-Tabelle zusammen, die im Magazin Nummer 1 gesendet wird. Daher wird in den Spalten 32, 33 und 34, welche den Magazinen Nummer 1, 2 und 3 zugeordnet sind, mit dem Code "1" signalisiert, daß die zuständige Basis-TOP-Tabelle im Magazin Nummer 1 übertragen wird.

Bei dem Beipiel wird ferner angenommen, daß ein zweiter Teletext-Anbieter die Magazine Nummer 4 und 5 belegt. Auch für diese Magazine ist eine einzige Basis-TOP-Tabelle vorgesehen, die im Magazin Nummer 4 übertragen wird. Aus diesem Grund ist in den zugehörigen Spalten 35 und 36 der Code "4" enthalten, welcher signalisiert, daß die zugehörige Basis-TOP-Tabelle im Magazin Nummer 4 übertragen wird.

Es sei ferner angenommen, daß das sechste und siebte Teletext-Magazin nicht belegt ist. Aus diesem Grunde wird in den Spalten Nummer 37 und 38 der Code "D" (= Magazin nicht belegt) übertragen.

Schließlich sei angenommen, daß das Magazin Nummer 8 von einem Teletext-Anbieter belegt ist, welcher keine Basis-TOP-Informationen anbietet. Aus diesem Grunde ist in Spalte 39 der Code "C" (= Magazin ohne TOP) vorgesehen.

Ein mit Teletext-Decoder ausgerüsteter Fernsehempfänger sucht bei der Initialisierung automatisch die Seite Nummer 100, zeigt den Inhalt dieser Seite (in der Regel eine Inhaltsübersicht) an und empfängt im Hintergrund die für den Benutzer unsichtbar übertragene Basis-TOP-Tabelle, welche die Seite Nummer 1F0 im Hexadezimalsystem trägt. Nach Empfang dieser Basis-TOP-Tabelle wertet er die in Reihe 23 dieser Tabelle übertragene "Liste" gemäß Fig. 4 aus. Hieraus erkennt er, daß in dem empfangenen Fernsehsignal drei verschiedene Teletext-Anbieter vorhanden sind, von denen der erste Anbieter drei Teletext-Magazine, der zweite Anbieter zwei Teletext-Magazine und der dritte Anbieter ein Teletext-Magazin anbietet. Ferner erkennt er, daß die Magazine Nummer 1, 2 und 3 des ersten Anbieters zusammengefaßt sind und eine gemeinsame Basis-TOP-Tabelle im Magazin Nummer 1 aufweisen. Desweiteren erkennt er, daß die Teletext-Informationen der zwei Teletext-Magazine des zweiten Teletext-Anbieters in einer Basis-TOP-Tabelle zusammengefaßt und auf der Seite 4F0 übertragen werden. Weiter erkennt der Empfänger, daß in den Teletext-Magazinen Nummer 6 und 7 keine Teletext-Seiten übertragen werden, so daß er bei einem entsprechenden Seiten-Wunsch des Benutzers sofort und ohne Wartezeit mit einer entsprechenden Fehlermeldung antworten kann. Schließlich erkennt der Empfänger, daß der dritte Anbieter ein einziges Magazin Nummer 8 ohne weitere TOP-Information sendet.

Aufgrund der vorgenannten Informationen kann der Teletext-Decoder in kürzester Zeit sich ein vollständiges Bild über den Aufbau der in dem betreffenden Fernsehsignal gesendeten Teletext-Informationen verschaffen. Aufgrund dieses vollständigen Bildes ist er in der Lage, zum einen seinen Seitenspeicher im Hintergrund schnellstmöglich mit Seiten zu laden, von denen der Decoder annimmt, daß sie vom Benutzer bevorzugt angewählt werden. Zum anderen kann der Decoder auf Benutzerwünsche schnellstens reagieren und insbesondere beim Nicht-Vorhandensein von gewünschten Seiten dem Benutzer ohne Zeitverlust eine Fehleranzeige liefern.

## Patentansprüche

1. Verfahren zum Empfangen sich in einem oder mehreren Zyklen wiederholender Teletextdaten, welche in einem Fernsehsignal enthalten sind, bei dem die Teletextdaten von dem Fernsehsignal abgetrennt, die zu jeweils einer Teletextseite gehörenden Daten gesammelt und die zu Magazinen mit jeweils 100 Seiten zusammengestellten Teletext-Seiten zwischengespeichert werden, und bei dem wenigstens eine, innerhalb eines Magazins als gesonderte Teletext-Seite übertragene Basis-TOP-Tabelle ausgewertet wird, die angibt, welche Teletext-Seiten tatsächlich vorhanden sind, wobei entsprechend der Auswertung der Basis-TOP-Tabelle eine gewünschte Teletext-Seite nur dann gesucht wird, wenn sich ihr Vorhandensein aus der Basis-TOP-Tabelle ergibt, **dadurch gekennzeichnet**, daß - bei einer parallelen Übertragung von zwei oder mehreren Magazinen als jeweils gesonderter Zyklus in demselben Fernsehsignal sowie bei Übertragung von einer, zwei oder mehreren Basis-TOP-Tabelle(n) mit jeweiliger Zuordnung zu einem Magazin oder zu einer Gruppe von Magazinen - eine zusätzliche Liste ausgewertet wird, welche in einer Basis-TOP-Tabelle enthalten ist und welche in codierter Form
(a) die Anzahl und Numerierung der maximal vorgesehenen Magazine,
(b) die Zuordnung(en) der Basis-TOP-Tabelle(n) zu den einzelnen Magazinen, und
(c) die Nummer(n) des bzw. der Magazine(s), wo die zugeordnete(n) Basis-TOP-Tabelle(n) übertragen wird bzw. werden,
angibt, wobei die Auswertung der zusätzlichen Liste dahingehend erfolgt, daß festgestellt wird, wieviele und welche Magazine momentan empfangbar sind und ob die empfangbaren Magazine mit - gegebenenfalls mit welchen - anderen empfangbaren Magazinen in einer gemeinsamen Basis-TOP-Tabelle zusammengefaßt sind.

2. Verfahren nach Anspruch 1, dadurch gekennzeichnet, daß die Liste ferner angibt, welchen Magazinen keine Basis-TOP-Tabelle zugeordnet ist.

3. Verfahren nach Anspruch 1 oder 2, dadurch gekennzeichnet, daß die Liste ferner angibt, welche Magazine in der maximal vorgesehenen Anzahl von Magazinen nicht gesendet werden.

## Claims

1. A method for receiving teletext data being contained in a television signal and being repeated within one or more cycles, in which
- the teletext data are separated from the television signal,
- data related to each one teletext page are collected, and
- the teletext pages being combined to magazins of each 100 pages are intermediately stored,
and in which
- at least one Basis TOP Table being transmitted within a magazin in form of a special teletext page is evaluated to determine which teletext pages are actually present, whereby in accordance with the evaluation of the Basis TOP Table a selected teletext page is only searched for if its presence is indicated by the Basis TOP Table,
**characterised in that**
in case of parallel transmission of two or more magazins each in form of a separate cycle within the same television signal and in case of a transmission of one, two or more Basis TOP Table(s), each of them being correlated to a magazin or to a group of magazins, an additional list is evaluated which is contained within one Basis TOP Table and which indicates in coded form
(a) the number and indexing of the provided maximum number of magazins,
(b) the relationship(s) of the Basis TOP Table to the correlating magazins, and
(c) the number(s) of the magazin(s) where the related Basis TOP Table(s) is (are) transmitted,
wherein the evaluation of the additional list is performed to determine
- how many and which magazins can be actually received, and
- whether the receivable magazins are combined with and, if any, with which other receivable magazins in a joint Basis TOP Table.

2. A method in accordance with claim 1, **characterised in that** the list further indicates to which magazines no Basis TOP Table is related.

3. A method in accordance with claim 1 or 2, **characterised in that** the list further indicates which magazins of the provided maximum number of magazins are not transmitted.

## Revendications

1. Procédé pour la réception de données télétextes répétées dans un ou plusieurs cycles, ces données étant contenues dans un signal de télévision, procédé dans lequel on sépare les données télétextes du signal de télévision, on groupe les données appartenant à chaque page télétexte et on mémorise de façon intermédiaire les pages de télétextes assemblées de magazines ayant chacun 100 pages et on utilise au moins un tableau TOP de base qui est transmis dans un magazine comme page télétexte spéciale et qui indique quelles pages télétextes sont effectivement disponibles, de sorte qu'avec l'utilisation du tableau TOP de base on recherche une page télétexte désirée seulement quand sa présence résulte du tableau TOP de base, caractérisé en ce qu'on utilise - dans une transmission parallèle de deux magazines, ou plus, en tant que cycle particulier à chaque fois dans le même signal de télévision ainsi que lors de la transmission d'un, deux, ou plus, tableaux TOP de base avec à chaque fois l'association à un magazine ou à un groupe de magazines - une liste supplémentaire qui est contenue dans un tableau TOP de base et qui indique sous forme codée :
a) le nombre et la numérotation du maximum de magazines prévus,
b) la relation, ou les relations, du, ou des, tableau(x) TOP de base avec les magazines individuels, et
c) le, ou les, numéro(s) du, ou des, magazine(s) où le, ou les, tableau(x) TOP de base se trouve(nt) ou sont transmis,
de sorte que l'utilisation de la liste supplémentaire permette de déterminer combien et quels magazines peuvent être reçus momentanément et si les magazines pouvant être reçus sont groupés avec - le cas échéant avec lesquels - d'autres magazines pouvant être reçus dans un tableau TOP de base commun.

2. Procédé selon la revendication 1, caractérisé en ce que la liste indique en outre quels magazines ne sont associés à aucun tableau TOP de base.

3. Procédé selon la revendication 1 ou 2, caractérisé en ce que la liste indique en outre quels magazines ne sont pas envoyés dans le nombre maximum prévu de magazines.
